# EUROPÄISCHE PATENTSCHRIFT

(11) **EP 0 974 782 B1**
(45) Veröffentlichungstag und Bekanntmachung des Hinweises auf die Patenterteilung: **03.09.2008**
(21) Anmeldenummer: 99110442.3
(22) Anmeldetag: 29.05.1999
(51) Int. Cl.: F16L 27/087, B23Q 1/00

(54) **Druckmittelzuführungseinrichtung**
Device for supplying fluid under pressure
Dispositif d'alimentation d'un fluide sous pression

(30) Priorität: 20.07.1998 DE 19832508
(43) Veröffentlichungstag der Anmeldung: 26.01.2000
(73) Patentinhaber: Hiestand, Karl, D-88630 Pfullendorf (DE)
(72) Erfinder: Hiestand, Karl, D-88630 Pfullendorf (DE)
(74) Vertreter: Engelhardt, Guido

(56) Entgegenhaltungen:
- EP-A- 0 525 371
- DE-A- 3 812 363
- DE-A- 4 404 547
- US-A- 3 392 995

## Beschreibung

Die Erfindung bezieht sich auf eine Einrichtung zur Zuführung eines Druckmittels aus einem ortsfest angeordneten Bauteil in ein rotierend antreibbares Bauteil, insbesondere zur Zuführung von Druckmittel in einen Hohlspannzylinder oder dgl., wobei zwischen den beiden Bauteilen ein radial gerichteter Dichtspalt vorgesehen ist, in die beiden Bauteile auf den einander zugekehrten Stirnflächen miteinander kommunizierende, an einen in dem ortsfesten Bauteil eingearbeiteten Druckmittelzuführungskanal bzw. an einen in dem rotierenden Bauteil vorgesehenen Kanal zur Weiterleitung des Druckmittels angeschlossene Ringnuten eingearbeitet sind und das ortsfeste Bauteil aus zwei drehfest miteinander verbundenen Ringen besteht, von denen der den Dichtspalt begrenzende Ring axial verschiebbar gehalten und zwischen den beiden Ringen mindestens eine Regeldruckkammer vorgesehen ist.

Durch die DE 24 04 801 A1 ist eine hydraulische Zylinderanordnung bekannt, bei der das Druckmittel mittels einer Einrichtung der vorgenannten Art aus einem zweiteilig ausgebildeten ortsfest angeordneten Bauteil über den radial gerichteten Dichtspalt in den rotierenden Zylinder eingebracht wird. Um hierbei eine ständige Anlage des axial verschiebbaren Ringes zu ermöglichen, sind zwischen diesem und dem weiteren Ring des ortsfesten Bauteils mehrere vorgespannte Druckfedern Regeldruckkammer über einen zusätzlichen Druckmittelanschluß gesondert Druckmittel zuführbar.

Mit Hilfe der Regeldruckkammer kann zwar auch hohen axial gerichteten Kräften, die sich in dem radialen Dichtspalt, bedingt durch die hydrodynamische Reibung des zu übertragenden Mediums, aufbauen können, entgegengewirkt werden, da der Regeldruckkammer Druckmittel, das abhängig ist von dem Betriebsdruck des zu übertragenden Mediums, zugeführt werden kann, eine selbsttätige Einstellung der Breite des radialen Dichtspaltes ist aber bei dieser bekannten Einrichtung nicht zu bewerkstelligen. Durch die von den vorgespannten Druckfedern auf den axial verschiebbaren Ring ständig ausgeübte Druckkraft wird dieser nämlich zusätzlich mit einer konstanten Kraft gegen den rotierenden Zylinder gepreßt, so daß insbesondere bei einer Übertragung eines Druckmediums mit geringem Betriebsdruck eine Anlage des axial verschiebbaren Ringes an dem Zylinder mitunter unvermeidbar ist. Vor allem aber ist von Nachteil, daß der axial verschiebbare Ring durch die Kraft der Druckfedern an dem rotierenden Zylinder anliegt, sobald keine Druckmittelübertragung stattfindet. Aufgrund der in diesen Betriebszuständen auftretenden metallischen Reibung ist der Verschleiß im Bereich der Ringnuten somit außerordentlich hoch, eine lange Lebensdauer ist demnach bei dieser Druckmittelübertragungseinrichtung nicht gegeben.

Aufgabe der Erfindung ist es daher, eine Einrichtung zur Zuführung eines Druckmittels aus einem ortsfest angeordneten Bauteil in ein rotierend antreibbares Bauteil der eingangs genannten Gattung zu schaffen, die nicht nur sehr einfach in ihrer konstruktiven Ausgestaltung und somit wirtschaftlich herzustellen ist, sondern bei der vor allem zuverlässig die Breite des radialen Dichtspaltes selbsttätig eingestellt wird, und zwar unabhängig von dem Betriebsmitteldruck des zu übertragenden Druckmittels und der Relativdrehzahlen zwischen den Bauteilen. Der axial verschiebbare Ring soll gewissermaßen schwimmend gelagert sein und der radial Dichtspalt soll sich jeweils auf einen Minimalwert einstellen, so daß eine metallische Reibung zwischen den beiden Bauteilen im Bereich des radialen Dichtspaltes nahezu ausgeschlossen ist und nur geringe Leckverluste in Kauf zu nehmen sind.

Gemäß der Erfindung wird dies bei einer Einrichtung zur Zuführung eines Druckmittels aus einem ortsfest angeordneten Bauteil in ein rotierend antreibbares Bauteil der vorgenannten Art dadurch erreicht, daß der verschiebbar gehaltene Ring des ortsfesten Bauteils auf der dem Dichtspalt zugekehrten Stirnfläche eine mit radialem Abstand zu dessen Ringnut angeordnete Zwischendruckkammer aufweist, oder daß zwischen dem axial verschiebbaren Ring des ortsfesten Bauteils und dem rotierenden Bauteil eine aus einem von diesen eingeschlossenen vorzugsweise in Achsrichtung geneigten Ringspalt bestehende Zwischendruckkammer gebildet ist und daß die Zwischendruckkammer über in den axial verschiebbaren Ring eingearbeitete Kanäle mit der Regeldruckkammer ständig verbunden ist, wobei die Regeldruckkammern durch einen oder mehrere an dem verschiebbaren Ring oder dem ortsfesten Ring abgestützte Kolben bzw. den verschiebbaren Ring gebildet sind.

Zweckmäßig ist es hierbei, das rotierende Bauteil durch eine in dem ortsfesten Bauteil eingesetzte Welle, vorzugsweise eine Hohlwelle und ein von dieser radial abstehendes Ansatzstück zu bilden und den verschiebbaren Ring des ortsfesten Bauteils auf einem oder mehreren jeweils in einer axial gerichteten Bohrung angeordneten Einsatzstücken zu halten, die an einem Deckel des ortsfesten Bauteils angebracht oder bei einer zweiteiligen Ausbildung des ortsfesten Bauteils in diesem eingesetzt sind, wobei eines der Einsatzstücke mit einem mit den in den beiden Ringen des ortsfesten Bauteils eingearbeiteten Druckmittelzuführungskanälen kommunizierenden Überleitungskanal versehen und der axial verschiebbare Ring über eine z. B. ballig ausgebildete Außenmantelfläche pendelnd an dem diesen aufnehmenden ortsfesten Ring abgestützt sein sollte.

Vorteilhaft ist es ferner, die Kolben in in die beiden Ringe eingearbeitete Bohrungen einzusetzen. Bei Anordnung der Regeldruckkammern in dem ortsfesten Ring sollten die Kolben mit die Zwischendruckkammer mit den Regeldruckkammern verbindende Kanäle versehen sein.

Die von dem Druckmittel beaufschlagten Flächen der Regeldruckkammer sollten größer bemessen sein als die radialen Flächen der Zwischendruckkammern und gegebenenfalls der in den axial verschiebbaren Ring eingearbeiteten Ringnut zusammen. Auch sollte zumindest eine der Regeldruckkammern mit einer Abflußdrossel versehen sein, die dadurch gebildet sein kann, daß einer der Kolben mit radialem Spiel in der Bohrung des ortsfesten Ringes eingesetzt und bei Anordnung der Regeldruckkammern in dem axial verschiebbaren Ring jeweils mit einem Verbindungskanal versehen ist, oder daß einer der Kolben einen an die Regeldruckkammer angeschlossenen Drosselkanal aufweist.

Zur Einstellung der maximalen Spaltgröße des radialen Dichtspaltes ist es angezeigt, den Verstellweg des verschiebbaren Ringes durch einen oder mehrere mechanische Anschläge zu begrenzen. Dies kann in der Weise bewerkstelligt werden, daß die mechanischen Anschläge durch die in den axial verschiebbaren Ring eingesetzten und mit dem ortsfesten Ring zusammenwirkenden Kolben gebildet sind, die auf der der Regeldruckkammer zugekehrten Stirnfläche mit einem Vorsprung versehen sind.

Vorteilhaft ist es ferner, der in dem verschiebbaren Ring eingearbeiteten Ringnut eine auf der dieser gegenüberliegenden Seite von den beiden Ringen eingeschlossene mit dieser oder dem Druckmittelzuführskanal verbundene Ausgleichskammer zugeordnet ist, deren in Richtung der Ringnut beaufschlagte Fläche vorzugsweise etwa gleich groß bemessen ist wie die radiale Ringfläche der Ringnut.

Wird eine Einrichtung zur Zuführung eines Druckmittels aus einem ortsfest angeordneten Bauteil in ein rotierend antreibbares Bauteil gemäß der Erfindung ausgebildet, so wird der radial gerichtete Dichtspalt selbsttätig auf eine maximale axiale Breite eingestellt, da mit Hilfe der Zwischendruckkammer und der Regelkammer ständig ein Druckausgleich erfolgt. Dadurch ist zuverlässig vermieden, daß der axial verschiebbare Ring des ortsfesten Bauteils an dem rotierenden Bauteil anliegt, und daß somit metallische Teile aneinander reiben. Ein störungsfreier Betrieb der vorschlagsgemäß ausgebildeten Druckmittelübertragungseinrichtung ist demnach über einen langen Zeitraum gewärleistet, wobei des weitern von Vorteil ist, daß nur eine geringe Leckage auftritt.

Mit minimalem Bauaufwand ist demnach eine zuverlässige Druckmittelübertragung unabhängig von dem Betriebsmitteldruck des zu übertragenden Mediums und den Differenzdrehzahlen zwischen dem ortsfesten und dem rotierenden Bauteil zu bewerkstelligen.

In der Zeichnung sind zwei Ausführungsbeispiele der gemäß der Erfindung ausgebildeten Einrichtung zur Zuführung eines Druckmittels aus einem oftsfest angeordneten Bauteil in ein rotierend antreibbares Bauteil dargestellt, die nachfolgend im einzelnen erläutert sind. Hierbei zeigt:
- Figur 1: die Druckmittelübertragungseinrichtung in einem axialen Schnitt,
- Figur 2: einen Schnitt nach der Linie II - II durch die Druckmittelübertragungseinrichtung nach Figur 1,
- Figur 3: eine Ausführungsvariante der Druckmittelübertragungseinrichtung nach Figur 1 mit in dem axial verschiebbaren Ring vorgesehenen Regeldruckkammern,
- Figur 4: die Druckmittelübertragungseinrichtung nach Figur 1 mit einer der in dem axial verschiebbaren Ring vorgesehenen Ringnut zugeordneten Ausgleichskammer,
- Figur 5: die Druckmittelübertragungseinrichtung nach Figur 1, mit einer durch einen axial gerichteten Ringspalt gebildeten Zwischendruckkammer,
und
- Figur 6: eine andersartige Ausgestaltung der Druckmittelübertragungseinrichtung nach Figur 5, mit axial gerichteter Zwischendruckkammer und Ausgleichskammer.

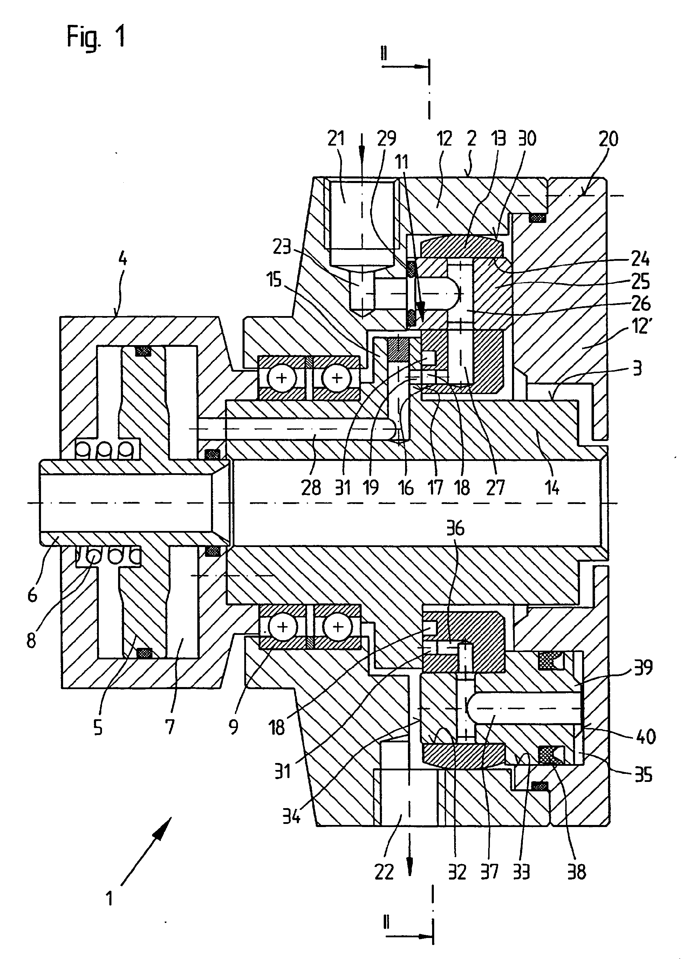

Die in den Figuren 1 bis 5 dargestellte und mit 1 bezeichnete Einrichtung dient zur Zuführung eines Druckmittels, beispielsweise einer Hydraulikflüssigkeit, aus einem ortsfest angeordneten Bauteil 2 in ein rotierend antreibbares Bauteil 3, mit dem ein Hohlspannzylinder 4 fest verbunden ist, und besteht im wesentlichen aus zwei das ortsfest angeordnete Bauteil 2 bildenden Ringen 12 und 13 sowie einer mit einem radial abstehenden Ansatzstück 15 versehenen Hohlwelle 14 als rotierendes Bauteil 3, wobei zwischen dem Ring 13 und dem Ansatzstück 15 ein radial gerichteter Dichtspalt 11 vorgesehen ist, über den das dem Hohlspannzylinder 4 zuzuführende Druckmittel aus dem Ring 13 in das Ansatzstück 15 bei einer Druckmittelübertragung strömt. In die einander zugekehrten Stirnflächen 16 und 17 des Ringes 13 bzw. des Ansatzstückes 15 sind dazu umlaufende miteinander kommunizierende Ringnuten 18 bzw. 19 eingearbeitet, die mit einem in den Ring 12 des ortsfesten Bauteils 2 vorgesehenen Anschlußleitung 21 bzw. über einen Kanal 28 mit einem in dem Zylinder 4 vorgesehenen, durch einen in diesen eingesetzten Kolben 5 gebildeten Druckraum 7 verbunden sind. Über eine als Hohlwelle gestaltete Kolbenstange 6 ist der entgegen der Kraft einer Rückstellfeder 8 bei einer Beaufschlagung durch das zugeführte Druckmittel axial nach links verschiebbare Kolben 5 z. B. mit einem Betätigungsglied eines Kraftspannfutters gekoppelt.

Die Druckmittelzufuhr in die Ringnut 18 des Ringes 13 erfolgt über ein Einsatzstück 25, das in einer in den Ring 13 eingearbeiteten Bohrung 24 eingesetzt und in dem Ring 12, der dazu einen mittels Schrauben 20 fest verbundenen Deckel 12' aufweist, der mit geringem axialem Spiel gehalten ist. In das Einsatzstück 25 ist ein Kanal 26 eingearbeitet, der mit in den Ringen 12 und 13 vorgesehenen Kanälen 23 bzw. 27 kommuniziert.

Der Kanal 23 ist hierbei mit der Anschlußleitung 21, der Kanal 27 mit der Ringnut 18 verbunden, so daß dieser, zumal zwischen dem Einsatzstück 25 und dem Ring 12 eine die Kanäle 23 und 26 abdichtende Dichtung 29 vorgesehen ist, verlustfrei Druckmittel zuführbar ist.

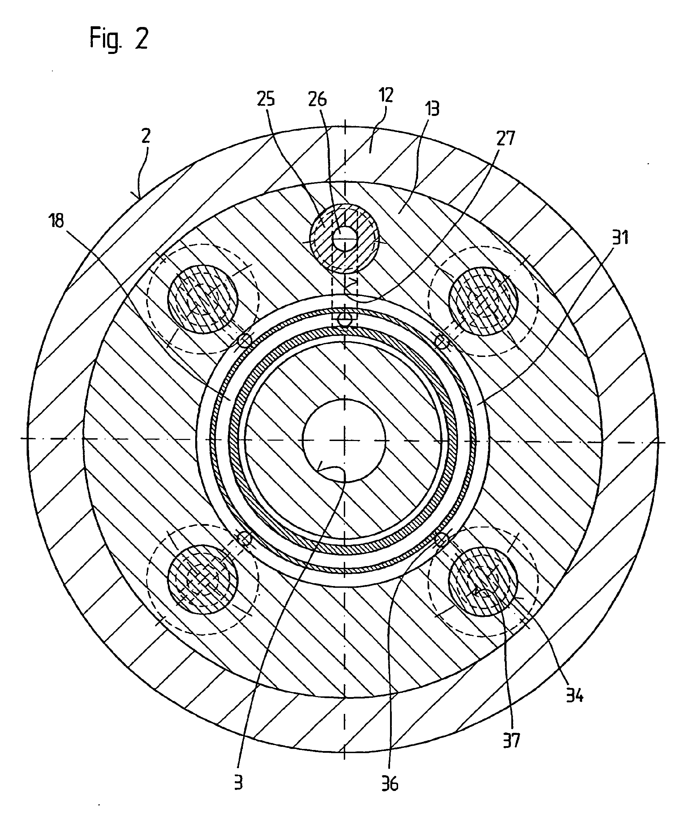

In den Ring 18 des ortsfesten Bauteils 2 sind, wie dies insbesondere der Figur 2 zu entnehmen ist, weitere gleichmäßig über den Umfang verteilt angeordnete Bohrungen 32 eingearbeitet, in die abgesetzte Kolben 34 mit einem Endstück eingesetzt sind. Mit den anderen Endstücken greifen die Kolben 34 in in den Deckel 12' eingearbeitete Bohrungen 33 ein, so daß der Ring 13 mittels der Kolben 34 drehfest mit dem Deckel 12' und somit mit dem Bauteil 2 verbunden ist. Außerdem bilden die Kolben 34 zusammen mit dem Deckel 12' jeweils eine Regeldruckkammer 35, denen Druckmittel über in dem Ring 13 vorgesehene Kanäle 36 und in den Kolben 34 eingearbeitete Kanäle 37 zugeführt wird, und zwar aus einer ringförmigen Zwischendruckkammer 31, die in die Stirnfläche 16 des Ringes 13 mit radialem Abstand zu der Ringnut 18 eingearbeit ist. Da die Regeldruckkammern 35 mittels in die Kolben 34 eingesetzter Dichtungen 38 abgedichtet sind und der Ring 13 durch die Kolben 34 zwar drehfest, aber axial verschiebbar auf dem Einsatzstück 25 gehalten und über eine ballige Außenmantelfläche 30 an dem Ring 12 abgestützt ist, stellt sich ein Gleichgewichtszustand zwischen der in der Zwischendruckkammer 31 herrschenden axial gerichteten Kraft und den in den Regeldruckkammern 35 erzeugten Axialkräften ein.

Wird über die Einrichtung 1 dem Hohlspannzylinder 4 Druckmittel zugeführt, so strömt dieses über die Kanäle 23, 26 und 27 zunächst in die in den Ring 13 eingearbeitete Ringnut 18 und sodann, und zwar auch bei Rotation des Bauteiles 3, über die Ringnut 19 und den Kanal 28 in den Druckraum 7. Dabei steht das zu übertragende Druckmittel in den Ringnuten 18 und 19, da der Kanal 18 als Drossel wirkt und vor allem bedingt durch den sich in dem Druckraum 7 aufbauenden Druck, ebenfalls unter Druck, so daß auf den Ring 13 eine Axialkraft einwirkt, durch die dieser geringfügig nach rechts verschoben und der radial gerichtete Dichtspalt 11 zwischen diesem und dem Ansatzstück 15 geöffnet wird. Aufgrund dieser axialen Verschiebung kann Druckmittel aus der Ringnut 18 durch den Dichtspalt 11 nach innen, vor allem aber nach außen abströmen und gelangt somit in die Zwischendruckkammer 31 und von dieser über die Kanäle 36 und 37 in die Regeldruckkammern 35. Durch den sich in den Regeldruckkammern 35 aufbauenden Druck werden die Kolben 34 und mit diesen der Ring 13 entgegen des in der Ringnut 18 und der Zwischendruckkammer 31 herrschenden Kräften wiederum nach links verschoben, so daß die Breite des radial gerichteten Dichtspaltes 11 verkleinert und der Druckmittelzufluß in die Regeldruckkammern 35 reduziert wird. Da der Druck in den Regeldruckkammern 35, bedingt durch Leckage oder gesteuert, in diesem Betriebszustand des Ringes 13 und der Kolben 34 abgebaut wird, wiederholen sich diese Bewegungsvorgänge, sobald der Gleichgewichtszustand nicht mehr gegeben ist, ständig, der Ring 13 pendelt gewissermaßen zwischen zwei Endstellungen.

Durch die auf die Kolben 34 einwirkenden Kräfte wird aber nicht nur den in der Ringnut 18 und der Zwischendruckkammer 31 erzeugten axial gerichteten Kräfte entgegengewirkt, sondern auch den Kräften, die durch die hydrodynamische Reibung des in dem radialen Dichtspalt 11 abströmenden Druckmittels entstehen. Um die Breite des Dichtspaltes 11 zu begrenzen, sind an den Kolben 34 auf der dem Deckel 12' zugekehrten Seite Vorsprünge 39 angeformt, die mit dem Deckel 12' zusammenwirkende Anschläge 40 bilden. Über einen in den Ring 12, der mittels Wälzlager 9 auf der Hohlwelle 14 gelagert ist, eingearbeiteten Anschluß 22 wird das über den radial gerichteten Dichtspalt 11 abströmende Druckmittel in den Kreislauf zurückgeführt.

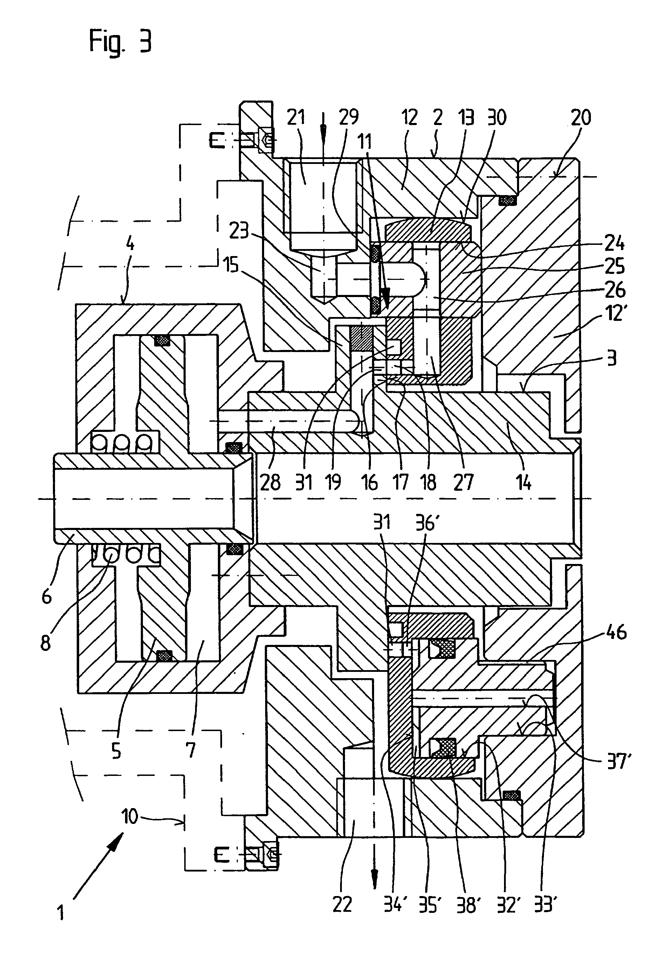

Bei der in Figur 3 gezeigten Ausführungsvariante sind die Regeldruckkammern 35' innerhalb des Ringes 13 vorgesehen. Die Kolben 34' sind wiederum in in den Ring 13 eingearbeitete Bohrungen 32' sowie in in dem Deckel 12' vorgesehene Bohrungen 33' eingesetzt, so daß der Ring 13 drehfest gehalten ist. Über Kanäle 36' strömt somit das Druckmittel aus der Zwischendruckkammer 31 unmittelbar in die Regeldruckkammer 35', die durch in die Kolben 34' eingesetzte Dichtungen 38' abgedichtet sind.

Um den Druckabbau in den Regeldruckkammern 35' gesteuert vorzunehmen, ist in einen der Kolben 34' zentrisch ein Kanal 37' eingearbeitet und in dem in die Bohrung 33' eingreifenden Bereich ist in die Außenmantellfäche ein Drosselkanal 46 eingearbeitet. Der Druck in den Regeldruckkammern 35', die untereinander über die Zwischendruckkammer 31 verbunden sind, wird somit durch das über den Drosselkanal 46 abströmende Druckmittel abgeriegelt. In Figur 3 ist auch gezeigt, daß das ortsfeste Bauteil 2 mittels eines strichpunktiert dargestellten Halters 10 an einem Maschinenteil abgestützt werden kann und somit nicht unmittelbar auf dem rotierenden Bauteil 3 zu lagern ist.

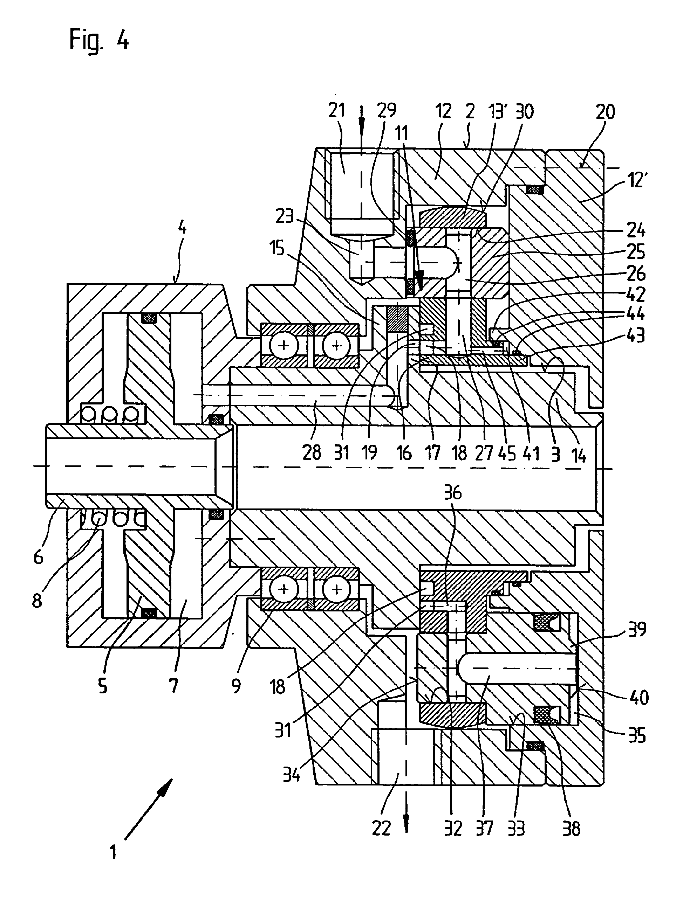

Gemäß Figur 4 ist der Ringnut 18 eine Ausgleichskammer 41 zugeordnet, die auf der dieser gegenüberliegenden Seite des Ringes 13' vorgesehen ist. Um die Ausgleichskammer 41 zu schaffen, sind der Deckel 12' und der Ring 13' jeweils mit einem axial abstehenden Ansatzstück 42 bzw. 43 versehen, von denen die Ausgleichskammer 41 eingeschlossen ist. Über einen Kanal 45 ist die Ausgleichskammer 41, die mittels Dichtungen 44 abgedichtet ist, an den in dem Ring 13' vorgesehenen Kanal 27 angeschlossen.

Durch die Ausgleichskammer 41 wird bewirkt, daß in dieser eine Axialkraft aufgebaut wird, die zu der in der Ringnut 18 erzeugten Axialkraft entgegengesetzt gerichtet ist. Dadurch erfolgt ein Ausgleich dieser Kräfte, so daß die zur Rückführung des Ringes 13' erforderlichen Kräfte gering gehalten werden können.

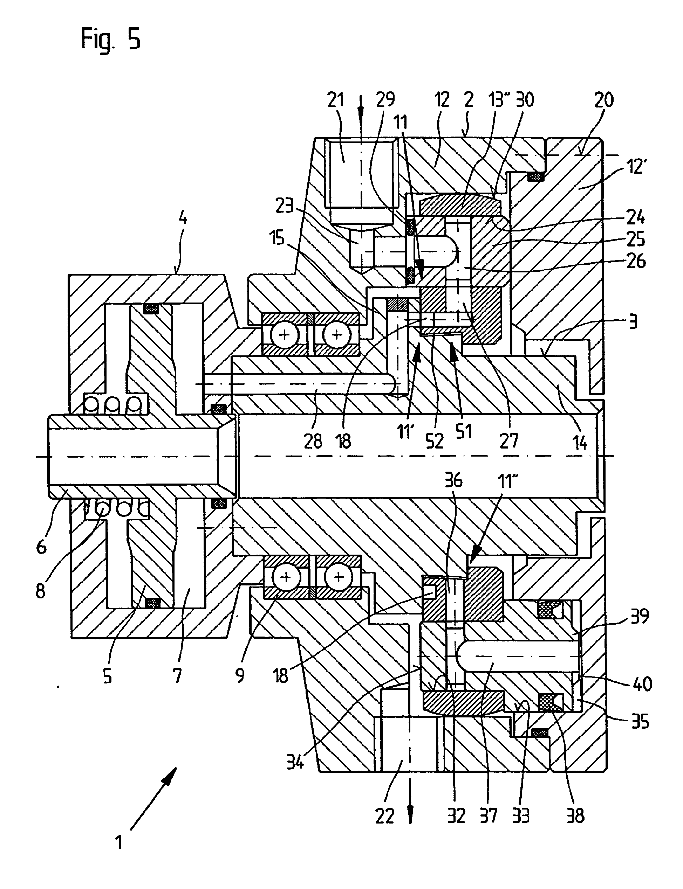

In Figur 5 ist gezeigt, daß eine mit den Regeldruckkammern 35 verbundene Zwischendruckkammer 51 auch durch einen axial gerichteten Spalt 52, der zwischen der Welle 14 des rotierenden Bautels 3 und dem Ring 13" vorgesehen ist, gebildet sein kann. Der radial gerichtete Dichtspalt 11', 11'' ist somit in zwei zueinander seitlich versetzte Dichtspalte unterteilt.

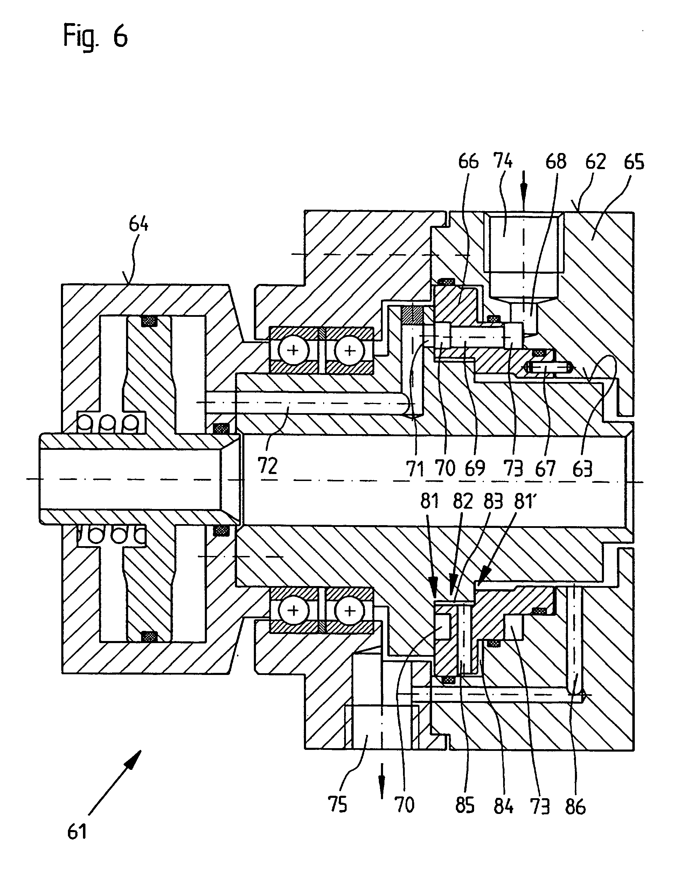

Bei der Einrichtung 61 zur Übertragung eines Druckmittels aus einem ortsfest angeordneten Bauteil 62 in ein rotierend angetriebenes Bauteil 63 und einen mit diesem verbundenen Zylinder 74 nach Figur 6 besteht das ortsfeste Bauteil 62 wiederum aus zwei Ringen 65 und 66, die über einen Stift 67 zwar drehfest miteinander verbunden sind, der Ring 66 ist aber gegenüber dem Ring 65 axial verschiebbar angeordnet. Des weiteren ist der radial gerichtete Dichtspalt 81, 81' in zwei Teilbereiche unterteilt, zwischen denen eine durch einen axial verlaufenden Ringspalt 83, gebildete Zwischendruckkammer 82, vorgesehen ist. Über einen in den Ring 66 eingearbeiteten Kanal 85 ist die Zwischendruckkammer 82 mit einer umlaufenden Regeldruckkammer 84 verbunden.

Des weiteren ist bei diesem Ausführungsbeispiel eine Ausgleichskammer 73 vorgesehen, die auf dem gleichen Durchmesserbereich angeordnet ist wie eine Ringnut 70, mittels der das Druckmittel aus dem Ring 66 in eine in das rotierende Bauteil 63 eingearbeitete Ringnut 71 übertragbar ist, die über einen Kanal 72 mit dem Zylinder 64 verbunden ist. Über Kanäle 68 und 69 ist das Druckmittel aus der Anschlußleitung 74 der Ringnut 70 zuführbar.

Die Druckmittelzuführung zu dem Zylinder 64 und das stetige Einpendeln des Ringes 66 erfolgt in gleicher Weise wie bei der Einrichtung 1 nach Figur 1 bzw. 5. Das aus dem Dichtspalt 81, 81' abströmende Druckmittel wird auch hierbei über eine Rücklaufleitung 75 bzw. einen dieser vorgeschalteten Rücklaufkanal 86 wiederum dem Kreislauf zugeführt.

## Patentansprüche

1. Einrichtung (1; 61) zur Zuführung eines Druckmittels aus einem ortsfest angeordneten Bauteil (2; 62) in ein rotierend antreibbares Bauteil (3; 63), insbesondere zur Zuführung von Druckmittel in einen Hohlspannzylinder (4; 64) oder dgl., wobei zwischen den beiden Bauteilen (2, 3) ein radial gerichteter Dichspalt (11) vorgesehen ist, in die beiden Bauteile (2; 62; 3; 63) auf den einander zugekehrten Stirnflächen (16, 17) miteinander kommunizierende, an einen in dem ortsfesten Bauteil (2; 62) eingearbeiteten Druckmittelzuführungskanal (23, 26, 27; 68, 69) bzw. an einen in dem rotierenden Bauteil (3; 63) vorgesehenen Kanal (28; 72) zur Weiterleitung des Druckmittels angeschlossene Ringnuten (12, 13; 70, 71) eingearbeitet sind und das ortsfeste Bauteil (2; 62) aus zwei drehfest miteinander verbundenen Ringen (12, 13; 65, 66) besteht, von denen der den Dichtspalt (11; 81, 81') begrenzende Ring (13; 66) axial verschiebbar gehalten und zwischen den beiden Ringen (12, 13; 65, 66) mindestens eine Regeldruckkammer (35; 84) vorgesehen ist,
**dadurch gekennzeichnet,**
**daß** der verschiebbar gehaltene Ring (13) des ortsfesten Bauteils (2) auf der dem Dichtspalt (11) zugekehrten Stirnfläche (16) eine mit radialem Abstand zu dessen Ringnut (18) angeordnete Zwischendruckkammer (31) aufweist oder daß zwischen dem axial verschiebbaren Ring (13"; 66) des ortsfesten Bauteils (12; 62) und dem rotierenden Bauteil (3; 63) eine aus einem von diesen eingeschlossenen vorzugsweise in Achsrichtung geneigten Ringspalt (52; 83) bestehende Zwischendruckkammer (51; 82) gebildet ist und daß die Zwischendruckkammer (31; 82) über in den axial verschiebbaren Ring (13, 13"; 66) eingearbeitete Kanäle (36, 37; 85) mit der Regeldruckkammer (35; 84) ständig verbunden ist, wobei die Regeldruckkammern (35, 35', 84) durch einen oder mehrere an dem verschiebbaren Ring (13) oder dem ortsfesten Ring (12') abgestützte Kolben (34, 34') bzw. den verschiebbaren Ring (66) gebildet sind.

2. Einrichtung nach Anspruch 1,
**dadurch gekennzeichnet,**
**daß** das rotierende Bauteil (3) durch eine in dem ortsfesten Bauteil (2) eingesetzte Welle (14), vorzugsweise eine Hohlwelle, und einer von dieser radial abstehenden Ansatzstück (15) besteht.

3. Einrichtung nach Anspruch 1 oder 2,
**dadurch gekennzeichnet,**
**daß** der verschiebbare Ring (13) des ortsfesten Bauteils (2) auf einem oder mehreren jeweils in einer axial gerichteten Bohrung (24) angeordneten Einsatzstücken (25) gehalten ist, die an einem Deckel (12') des ortsfesten Bauteils (2) angebracht oder bei einer zweiteiligen Ausbildung des ortsfesten Bauteils (2) in diesem eingesetzt sind.

4. Einrichtung nach Anspruch 3,
**dadurch gekennzeichnet,**
**daß** eines der Einsatzstücke (25) mit einem mit den in den beiden Ringen (12, 13) des ortsfesten Bauteils (2) eingearbeiteten Druckmittelzuführungskanälen (23; 27) kommunizierenden Überleitungskanal (26) versehen ist.

5. Einrichtung nach einem der Ansprüche 1 bis 4,
**dadurch gekennzeichnet,**
**daß** der axial verschiebbare Ring (13) über eine z. B. ballig ausgebildete Außenmantelfläche (30) pendelnd an dem diesen aufnehmenden ortsfesten Ring (12) abgestützt ist.

6. Einrichtung nach einem der Ansprüche 1 bis 5,
**dadurch gekennzeichnet,**
**daß** die Kolben (34) in in die beiden Ringe (12, 13) eingearbeitete Bohrungen (32, 33 bzw. 32', 33') eingesetzt sind.

7. Einrichtung nach Anspruch 6,
**dadurch gekennzeichnet,**
**daß** bei Anordnung der Regeldruckkammern (35) in dem ortsfesten Ring (12') die Kolben (34) mit die Zwischendruckkammer (31) mit den Regeldruckkammern (35) verbindende Kanäle (37) versehen sind.

## Claims

1. A device (1; 61) for supplying fluid under pressure from a stationary component (2; 62) into a rotating drivable component (3; 63'), in particular for supplying fluid under pressure into a hollow clamping cylinder (4; 64) or the like, in which both components (2, 3) have a radially directed sealing gap (11) provided in between them, with ring grooves (12, 13; 70, 71) communicating with one another worked into the end faces (16, 17) of both components (2, 62; 3, 63) that face one another and being connected to a pressurised medium supply channel (23, 26, 27; 68, 69) worked into the stationary component (2; 62) or to a channel (28; 72) provided in the rotating component (3; 63) for the passage of the fluid under pressure and the stationary component (2; 62) consisting of two rings (12, 13; 65, 66) connected together in a rotationally fixed arrangement, with the ring (13;66) that limits the sealing gap (11; 81, 81') being held in an axially movable arrangement and with at least one control pressure chamber (35; 84) provided between both rings (12, 13; 65, 66),
**characterised in that,**
the ring (13) of the stationary component (2) that is held in a movable arrangement has on its end face (16) facing the sealing gap (11) an intermediate pressure chamber (31) arranged at a radial distance from its ring groove (18) or that an intermediate pressure chamber (51; 82) is formed between the axially movable ring (13"; 66) of the stationary component (12; 62) and the rotating component (3; 63), this intermediate pressure chamber (51; 82) being formed from a ring gap (52, 83) enclosed by these components and preferably inclined in an axial direction, and that the intermediate pressure chamber (31; 82) is constantly connected to the control pressure chamber (35; 84) by means of channels (36, 37; 85) worked into the axially movable ring (13, 13"; 66), in which case the control pressure chambers (35, 35', 84) are formed by one or more pistons (34, 34') supported on the movable ring (13) or the stationary ring (12'), or is formed by the movable ring (66).

2. The device in accordance with Claim 1,
**characterised in that,**
the rotating component (3) consists of a shaft (14), preferably a hollow shaft, inserted in the stationary component (2), and of a projection (15) that projects from the shaft (14) in a radial direction.

3. The device in accordance with Claim 1 or 2,
**characterised in that,**
the movable ring (13) of the stationary component (2) is held on one or more insert pieces (25), each of which is arranged in an axially aligned hole (24), the pieces (25) being attached to a cover (12') of the stationary component (2) or, if the stationary component (2) is arranged centrally, are inserted in it.

4. The device in accordance with Claim 3,
**characterised in that,**
one of the insert pieces (25) is provided with a transfer channel (26) that communicates with pressurised medium supply channels (23; 27) worked into the two rings (12, 13) of the stationary component (2).

5. The device in accordance with one of Claims 1 to 4,
**characterised in that,**
the axially movable ring (13) is supported in a pendulum arrangement on the stationary ring (12) that accommodates it, by means of an outer jacket surface (30) that is, for example, configured with a crowned profile.

6. The device in accordance with one of Claims 1 to 5,
**characterised in that,**
the pistons (34) are inserted in holes (32, 33 or 32', 33') worked into both rings (12, 13).

7. The device in accordance with Claim 6,
**characterised in that,**
when the control pressure chambers (35) are arranged in the stationary ring (12'), the pistons (34) are provided with channels (37) that connect the intermediate pressure chamber (31) to the control pressure chambers (35).

## Revendications

1. Equipement (1 ; 61) pour l'amenée d'un milieu sous pression à partir d'un composant stationnaire (2 ; 62) vers un composant entraîné en rotation (3 ; 63), en particulier pour l'amenée d'un milieu sous pression vers un vérin de serrage creux (4 ; 64) ou un organe similaire, où il est prévu entre les deux composants (2, 3) une fente d'étoupage radiale (11), où, sur les faces s'opposant (16, 17) des deux composants (2 ; 62 ; 3 ; 63), il est pratiqué des rainures annulaires (12, 13 ; 70, 71) communiquant entre-elles et branchées sur un canal d'arrivée du milieu sous pression (23, 26, 27 ; 68, 69) prévu dans le composant stationnaire (2 ; 62) ou sur un canal (28 ; 72) pratiqué dans le composant en rotation (3 ; 63) pour le transport ultérieur du milieu sous pression, et ou le composant stationnaire (2 ; 62) comprend deux anneaux (12, 13 ; 65; 66) liés ensemble de manière à résister à la torsion, dont l'anneau (13 ; 66) limitant la fente d'étoupage (11 ; 81, 81') se laisse déplacer axialement, et où il est prévu entre les deux anneaux (12, 13 ; 65, 66) au moins une chambre de pression de réglage (35 ; 84),
**caractérisé en ce que**
sur la face (16) donnant vers la fente d'étoupage (11), l'anneau déplaçable (13) du composant stationnaire (2) possède une chambre de pression intermédiaire (31) écartée radialement par rapport à sa fente annulaire (18), ou que, entre l'anneau axialement déplaçable (13" ; 66) du composant stationnaire (12 ; 62) et le composant rotatif (3 ; 63), il est prévu un chambre de pression intermédiaire (51 ; 82) formée par la fente annulaire (52 ; 83) renfermée par ceux-ci et inclinée en direction axiale, et que, par l'intermédiaire de canaux (36, 37 ; 85) pratiqués dans l'anneau axialement déplaçable (13, 13" ; 66), la chambre de pression intermédiaire (31 ; 82) est constamment raccordée à la chambre de pression de réglage (35 ; 84), les chambres de pression de réglage (35, 35', 84) étant formées par un ou par plusieurs pistons (34, 34') appuyés sur l'anneau déplaçable (13) ou sur l'anneau stationnaire (12') ou par l'anneau déplaçable (66).

2. Equipement d'après la revendication 1,
**caractérisé en ce que**
le composant rotatif (3) consiste d'un arbre (14), de préférence un arbre creux inséré dans le composant stationnaire (2), et d'un embout (15) saillant radialement de celui-ci.

3. Equipement d'après les revendications 1 ou 2,
**caractérisé en ce que**
l'anneau déplaçable (13) du composant stationnaire (2) est retenu sur un ou sur plusieurs éléments (25) disposés respectivement dans un alésage axial (24) et fixés sur un couvercle (12') du composant stationnaire (2) ou montés dans le composant stationnaire (2) du moment que celui-ci est conçu en deux pièces.

4. Equipement d'après la revendication 3,
**caractérisé en ce**
**qu'**un des éléments (25) est muni d'un canal de transfert (26) communiquant avec les canaux d'amenée du liquide sous pression (23 ; 27) pratiqués dans les deux anneaux (12, 13) du composant stationnaire (2).

5. Equipement d'après une des revendications 1 à 4,
**caractérisé en ce que**
l'anneau axialement déplaçable (13) s'appuie par l'intermédiaire d'une enveloppe extérieure p. ex. bombée (30) de manière oscillante sur l'anneau stationnaire (12) dans lequel il est logé.

6. Equipement d'après une des revendications 1 à 5,
**caractérisé en ce que**
les pistons (34) sont montés dans des alésages (32, 33 ou 32', 33') pratiqués dans les deux anneaux (12, 13).

7. Equipement d'après la revendication 6,
**caractérisé en ce que,**
en cas d'arrangement des chambres de pression de réglage (35) dans l'anneau stationnaire (12'), les pistons (34) comprennent des canaux (37) raccordant la chambre de pression intermédiaire (31) et les chambres de pression de réglage (35).
